# EUROPEAN PATENT APPLICATION

(11) **EP 4 667 986 A1**
(43) Date of publication of application: **24.12.2025**
(21) Application number: 24769638.8
(22) Date of filing: 11.01.2024
(51) Int. Cl.: G02B 6/02, G02B 6/036

(54) **OPTICAL FIBER**

(30) Priority: 14.03.2023 CN 202310281156
(71) Applicant: Huawei Technologies Co., Ltd., Shenzhen, Guangdong 518129 (CN)
(72) Inventor: YANG, Haofan, Shenzhen, Guangdong 518129 (CN); GAN, Lin, Shenzhen, Guangdong 518129 (CN); GUO, Qiang, Shenzhen, Guangdong 518129 (CN)
(74) Representative: Pfenning, Meinig & Partner mbB
(86) International application number: PCT/CN2024/071873
(87) International publication number: WO 2024/187942

(57) **Abstract**

This application provides an optical fiber. The optical fiber includes an inner core layer, an outer core layer, an intermediate cladding layer, an inner cladding layer, a depressed cladding layer, and an outer cladding layer that are arranged in sequence from inside to outside. Refractive indexes of the inner core layer, the outer core layer, the intermediate cladding layer, the inner cladding layer, and the depressed cladding layer are different, and the refractive index of the depressed cladding layer is less than a refractive index of any one of the inner core layer, the outer core layer, the intermediate cladding layer, and the inner cladding layer. A radius of the inner core layer ranges from 1.40 µm to 4.80 µm, and a relative refractive index difference between the inner core layer and the outer cladding layer ranges from 0.08% to 0.24%. A radius of the outer core layer ranges from 4.58 µm to 7.50 µm, and a relative refractive index difference between the outer core layer and the outer cladding layer ranges from 0.16% to 0.48%. A radius of the intermediate cladding layer ranges from 5.50 µm to 9.00 µm, and a relative refractive index difference between the intermediate cladding layer and the outer cladding layer ranges from -0.08% to 0.20%. A radius of the inner cladding layer ranges from 7.57 µm to 10.00 µm. A radius of the depressed cladding layer ranges from 9.21 µm to 18.00 µm, and a relative refractive index difference between the depressed cladding layer and the outer cladding layer ranges from -1.00% to -0.02%. The radius and the refractive index of each layer in the optical fiber are properly designed, to increase an effective mode field area of the optical fiber and reduce a cut-off wavelength, so as to improve performance of the optical fiber.

## Description

### CROSS-REFERENCE TO RELATED APPLICATIONS

This application claims priority to Chinese Patent Application No. 202310281156.0, filed with the China National Intellectual Property Administration on March 14, 2023 and entitled "OPTICAL FIBER", which is incorporated herein by reference in its entirety.

### TECHNICAL FIELD

This application relates to the field of optical communication technologies, and in particular, to an optical fiber.

### BACKGROUND

Driven by network acceleration and data center interconnection applications, a 400G single-carrier communication system is to be mainstream in the future. Compared with a 100G communication system, the 400G communication system requires an optical signal-to-noise ratio (optical signal to noise ratio, OSNR) that is 6 dB higher. In addition, as a transmission rate increases, nonlinear effect of the optical fiber has greater impact on transmission performance of a communication system, and extension of a transmission distance without electrical regeneration in a high-speed optical transmission network also faces a great challenge. If the 400G communication system is deployed based on G.652 optical fibers, a transmission distance without regeneration is only one quarter of that of the 100G communication system. Compared with the G.652 optical fibers, G.654 optical fibers can improve an optical signal-to-noise ratio by about 3 dB in a same situation. Therefore, the G.654 optical fibers with characteristics of a large effective area and a low attenuation coefficient are preferred for 400G and future Tbit/s ultra-high transmission communication systems.

Compared with the G.652 optical fibers, the G.654 optical fibers have a typical attenuation that is about 0.02 dB/km lower and a larger effective mode field area, and therefore can reduce optical power density of fiber cores and reduce impact of nonlinear optical effect on transmission performance. However, a subsequent problem is that an increase of an effective mode field area of an optical fiber causes an increase of a cut-off wavelength. As a result, the G.654 optical fibers cannot be used in a short wavelength band (short wavelength, S band, with a wavelength ranging from 1460 nm to 1530 nm).

Therefore, how to reduce the cut-off wavelength of the optical fiber when the effective mode field area of the optical fiber is increased is a technical problem that needs to be urgently resolved.

### SUMMARY

Embodiments of this application provide an optical fiber, to reduce a cut-off wavelength of the optical fiber when an effective mode field area of the optical fiber is increased, so as to improve performance and a transmission capacity of the optical fiber.

The optical fiber in embodiments of this application may include a core layer and a cladding layer surrounding the core layer. The core layer is a layer closest to a central axis of a core of the optical fiber, and the core layer may include an inner core layer and an outer core layer surrounding the inner core layer. The cladding layer may include: an intermediate cladding layer, an inner cladding layer, a depressed cladding layer, and an outer cladding layer that are arranged in sequence from inside to outside. In other words, the optical fiber includes the inner core layer, the outer core layer, the intermediate cladding layer, the inner cladding layer, the depressed cladding layer, and the outer cladding layer that are arranged in sequence from inside to outside.

In this embodiment of this application, refractive indexes of the inner core layer, the outer core layer, the intermediate cladding layer, the inner cladding layer, and the depressed cladding layer are different, and the refractive index of the depressed cladding layer is less than a refractive index of any one of the inner core layer, the outer core layer, the intermediate cladding layer, and the inner cladding layer.

A radius R1 of the inner core layer may range from 1.40 µm to 4.80 µm, and a relative refractive index difference Δ1 between the inner core layer and the outer cladding layer may range from 0.08% to 0.24%. A radius R2 of the outer core layer may range from 4.58 µm to 7.50 µm, and a relative refractive index difference Δ2 between the outer core layer and the outer cladding layer may range from 0.16% to 0.48%. A radius R3 of the intermediate cladding layer may range from 5.50 µm to 9.00 µm, a relative refractive index difference Δ3 between the intermediate cladding layer and the outer cladding layer may range from -0.08% to 0.20%, and the relative refractive index difference between the intermediate cladding layer and the outer cladding layer is not 0 (that is, Δ3≠0). A radius R4 of the inner cladding layer may range from 7.57 µm to 10.00 µm. A radius R5 of the depressed cladding layer may range from 9.21 µm to 18.00 µm, and a relative refractive index difference Δ4 between the depressed cladding layer and the outer cladding layer may range from -1.00% to -0.02%.

In the optical fiber provided in this application, a radius and a refractive index of each layer in the optical fiber are properly designed, so that energy distribution of the optical fiber is changed, and an effective mode field area of the optical fiber can be effectively increased when parameters such as a macro-bending loss and dispersion performance of the optical fiber are ensured. In addition, compared with a related technology, in this embodiment of this application, the inner cladding layer is arranged between the intermediate cladding layer and the depressed cladding layer, so that impact of the depressed cladding layer on key performance of the optical fiber, especially impact on an effective mode field area and a cut-off wavelength can be reduced, to increase the effective mode field area of the optical fiber and reduce the cut-off wavelength. In addition, the optical fiber in embodiments of this application has a simple structure, and a material of each layer in the optical fiber does not need to be additionally designed. Therefore, a requirement on a manufacturing process of the optical fiber is low, and manufacturing costs are low.

The optical fiber provided in embodiments of this application is a single-mode optical fiber that complies with the G.654.E standard. The optical fiber in embodiments of this application has a large effective mode field area and a short cut-off wavelength. The effective mode field area of the optical fiber may be greater than 110 µm². For example, the effective mode field area of the optical fiber may range from 110.80 µm² to 149.35 µm², and the cut-off wavelength of the optical fiber may be less than or equal to 1460 nm. For example, the cut-off wavelength of the optical fiber may range from 1292 nm to 1455 nm.

Optical fiber spectrum resources used in an optical fiber communication system are an S (short wavelength) band, a C (conventional) band, and an L (long-wavelength) band. The S band is a short wavelength band with a wavelength ranging from 1460 nm to 1530 nm. The C band is a most commonly used band in optical communication with a wavelength ranging from 1530 nm to 1565 nm. The L band is a long wavelength band with a wavelength ranging from 1565 nm to 1625 nm. In this embodiment of this application, the cut-off wavelength of the optical fiber is less than or equal to 1460 nm. That is, the optical fiber in embodiments of this application can be used in the S band, so that an available spectrum range of the optical fiber is extended, and requirements of 400G and future Tbit/s ultra-high transmission communication systems can be met.

In addition, another parameter of the optical fiber provided in this embodiment of this application also meets a requirement of the G.654.E standard. Specifically, in this embodiment of this application, dispersion of the optical fiber at 1550 nm may be less than or equal to 23 ps/(nm·km). For example, the dispersion of the optical fiber at 1550 nm may range from 20.33 ps/(nm·km) to 22.90 ps/(nm·km). Dispersion of the optical fiber at 1625 nm may be less than or equal to 28 ps/(nm·km). For example, the dispersion of the optical fiber at 1625 nm may range from 24.68 ps/(nm·km) to 27.63 ps/(nm·km). A dispersion slope of the optical fiber at 1550 nm may be less than or equal to 0.07 ps/(nm² ·km). For example, the dispersion slope of the optical fiber at 1550 nm may range from 0.05347 ps/(nm²·km) to 0.06168 ps/(nm² ·km). In addition, the optical fiber in embodiments of this application has a low macro-bending loss. A bending radius of the optical fiber is about 30 mm. When the optical fiber is wound 100 turns, a macro-bending loss of the optical fiber at 1550 nm may be less than or equal to 0.1 dB. For example, the macro-bending loss of the optical fiber at 1550 nm may range from 9.30×10⁻⁵ dB to 1.37×10⁻² dB. A macro-bending loss of the optical fiber at 1625 nm may be less than or equal to 0.1 dB. For example, the macro-bending loss of the optical fiber at 1625 nm may range from 1.51×10⁻³ dB to 9.84×10⁻² dB.

In some embodiments of this application, a thickness (R2-R1) of the outer core layer may range from 1.42 µm to 3.9 µm, a thickness (R3-R2) of the intermediate cladding layer may range from 0.2 µm to 1.62 µm, a thickness (R4-R3) of the inner cladding layer may range from 0.77 µm to 3.55 µm, and a thickness (R5-R4) of the depressed cladding layer may range from 1.06 µm to 8 µm. A radius of the outer cladding layer may be about 62.5 µm.

In a possible implementation, both the inner core layer and the outer core layer may include a germanium-doped silicon dioxide material, and germanium doping concentrations of the inner core layer and the outer core layer are different. That is, the inner core layer and the outer core layer may be silicon dioxide glass layers with different germanium doping concentrations. The intermediate cladding layer closely surrounds the core layer, and the intermediate cladding layer may include a fluorine-doped or germanium-doped silicon dioxide material. The inner cladding layer closely surrounds the intermediate cladding layer. The inner cladding layer may include a silicon dioxide material. Optionally, the inner cladding layer may include an undoped pure silicon dioxide material. Alternatively, the inner cladding layer may include a fluorine-doped or germanium-doped silicon dioxide material. The depressed cladding layer closely surrounds the inner cladding layer, and the depressed cladding layer includes a fluorine-doped silicon dioxide material. The outer cladding layer closely surrounds the depressed cladding layer, and the outer cladding layer includes an undoped pure silicon dioxide material. Optionally, refractive indexes of the inner cladding layer and the outer cladding layer may be the same, or the refractive indexes of the inner cladding layer and the outer cladding layer may be different.

The foregoing describes a basic structure of the optical fiber in embodiments of this application. In embodiments of this application, the optical fiber has a plurality of implementations. The following describes in detail a specific implementation of the optical fiber in embodiments of this application.

### Implementation 1:

The refractive index of the inner core layer is less than the refractive index of the outer core layer, the refractive index of the inner core layer is greater than the refractive index of the intermediate cladding layer, the refractive index of the intermediate cladding layer is greater than the refractive index of the inner cladding layer, and the refractive index of the depressed cladding layer is less than a refractive index of the outer cladding layer.

### Implementation 2:

The refractive index of the inner core layer is greater than the refractive index of the outer core layer, the refractive index of the outer core layer is greater than the refractive index of the intermediate cladding layer, the refractive index of the intermediate cladding layer is greater than the refractive index of the inner cladding layer, and the refractive index of the depressed cladding layer is less than a refractive index of the outer cladding layer. Different from Implementation 1, in Implementation 2, the refractive index of the inner core layer is greater than the refractive index of the outer core layer, so that the effective mode field area of the optical fiber can be larger.

### Implementation 3:

The refractive index of the inner core layer is less than the refractive index of the outer core layer, the refractive index of the inner core layer is greater than the refractive index of the intermediate cladding layer, the refractive index of the intermediate cladding layer is less than the refractive index of the inner cladding layer, and the refractive index of the depressed cladding layer is less than a refractive index of the outer cladding layer. Different from Implementation 1, in Implementation 3, the refractive index of the intermediate cladding layer is less than the refractive index of the inner cladding layer, so that the macro-bending loss of the optical fiber can be reduced.

### Implementation 4:

The refractive index of the inner core layer is greater than the refractive index of the outer core layer, the refractive index of the outer core layer is greater than the refractive index of the intermediate cladding layer, the refractive index of the intermediate cladding layer is less than the refractive index of the inner cladding layer, and the refractive index of the depressed cladding layer is less than a refractive index of the outer cladding layer. Different from Implementation 2, in Implementation 4, the refractive index of the intermediate cladding layer is less than the refractive index of the inner cladding layer, so that the macro-bending loss of the optical fiber can be reduced.

In conclusion, in this application, a radius and a refractive index of each layer in the optical fiber are properly designed, so that the cut-off wavelength of the optical fiber is less than 1460 nm, and the optical fiber is applicable to the S band. This extends a single-mode spectral range of a G.654 optical fiber. Therefore, the optical fiber has a large effective mode field area, to effectively suppress impact of nonlinear effect and reduce the macro-bending loss of the optical fiber. In other words, the optical fiber in embodiments of this application can ensure performance of an original G.654.E optical fiber, and implement a large effective mode field area and a cut-off wavelength that are lower than those of the S band. That is, an optical fiber that meets the G.654 standard is obtained. Therefore, the optical fiber in embodiments of this application can be used in 400G and future Tbit/s ultra-high transmission communication systems. A new profile structure is simple and controllable.

### BRIEF DESCRIPTION OF DRAWINGS

FIG. 1 is a diagram of a structure of an optical fiber according to an embodiment of this application;
FIG. 2 is a diagram of a structure design of an optical fiber according to an embodiment of this application;
FIG. 3 is a diagram of another structure design of an optical fiber according to an embodiment of this application;
FIG. 4 is a diagram of another structure design of an optical fiber according to an embodiment of this application; and
FIG. 5 is a diagram of another structure design of an optical fiber according to an embodiment of this application.

### Reference numerals:

11: core layer; 111: inner core layer; 112: outer core layer; 12: cladding layer; 121: intermediate cladding layer; 122: inner cladding layer; 123: depressed cladding layer; 124: outer cladding layer.

### DESCRIPTION OF EMBODIMENTS

To make the objectives, technical solutions, and advantages of this application clearer, the following further describes this application in detail with reference to the accompanying drawings.

It should be noted that same reference numerals in the accompanying drawings of this application denote same or similar structures. Therefore, repeated descriptions thereof are omitted. Expressions of locations and directions in this application are described by using the accompanying drawings as an example. However, changes may also be made as required, and all the changes fall within the protection scope of this application. The accompanying drawings in this application are merely used to illustrate relative position relationships and do not represent an actual scale.

To improve performance of an optical fiber and expand a transmission capacity of the optical fiber, embodiments of this application provide an optical fiber. A proper structure is designed, so that the optical fiber in embodiments of this application has a large effective mode field area and a short cut-off wavelength. The optical fiber complies with the G.654.E standard, and can be used in 400G and future Tbit/s ultra-high transmission communication systems.

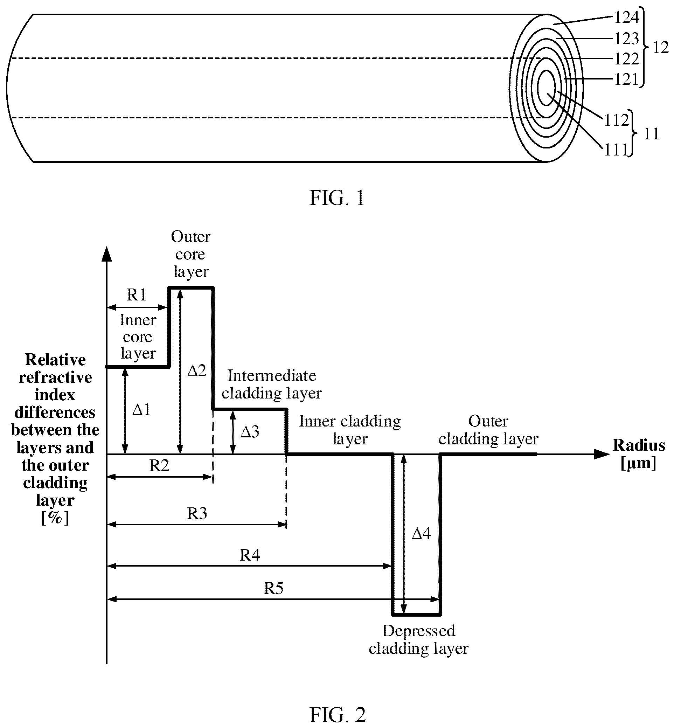

FIG. 1 is a diagram of a structure of an optical fiber according to an embodiment of this application. As shown in FIG. 1, the optical fiber in this embodiment of this application may include a core layer 11 and a cladding layer 12 surrounding the core layer 11. The core layer 11 is a layer closest to a central axis of a core of the optical fiber, and the core layer 11 may include an inner core layer 111 and an outer core layer 112 surrounding the inner core layer 111. The cladding layer 12 may include: an intermediate cladding layer 121, an inner cladding layer 122, a depressed cladding layer 123, and an outer cladding layer 124 that are arranged in sequence from inside to outside. In other words, the optical fiber includes: the inner core layer 111, the outer core layer 112, the intermediate cladding layer 121, the inner cladding layer 122, the depressed cladding layer 123, and the outer cladding layer 124 that are arranged in sequence from inside to outside.

In this embodiment of this application, refractive indexes of the inner core layer 111, the outer core layer 112, the intermediate cladding layer 121, the inner cladding layer 122, and the depressed cladding layer 123 are different, and the refractive index of the depressed cladding layer 123 is less than a refractive index of any one of the inner core layer 111, the outer core layer 112, the intermediate cladding layer 121, and the inner cladding layer 122.

A radius R1 of the inner core layer may range from 1.40 µm to 4.80 µm, and a relative refractive index difference Δ1 between the inner core layer and the outer cladding layer may range from 0.08% to 0.24%. A radius R2 of the outer core layer may range from 4.58 µm to 7.50 µm, and a relative refractive index difference Δ2 between the outer core layer and the outer cladding layer may range from 0.16% to 0.48%. A radius R3 of the intermediate cladding layer may range from 5.50 µm to 9.00 µm, a relative refractive index difference Δ3 between the intermediate cladding layer and the outer cladding layer may range from -0.08% to 0.20%, and the relative refractive index difference between the intermediate cladding layer and the outer cladding layer is not 0 (that is, Δ3≠0). A radius R4 of the inner cladding layer may range from 7.57 µm to 10.00 µm. A radius R5 of the depressed cladding layer may range from 9.21 µm to 18.00 µm, and a relative refractive index difference Δ4 between the depressed cladding layer and the outer cladding layer may range from -1.00% to -0.02%.

In the optical fiber provided in this application, a radius and a refractive index of each layer in the optical fiber are properly designed, so that energy distribution of the optical fiber is changed, and an effective mode field area of the optical fiber can be effectively increased when parameters such as a macro-bending loss and dispersion performance of the optical fiber are ensured. In addition, compared with a related technology, in this embodiment of this application, the inner cladding layer is arranged between the intermediate cladding layer and the depressed cladding layer, so that impact of the depressed cladding layer on key performance of the optical fiber, especially impact on an effective mode field area and a cut-off wavelength can be reduced, to increase the effective mode field area of the optical fiber and reduce the cut-off wavelength. In addition, the optical fiber in embodiments of this application has a simple structure, and a material of each layer in the optical fiber does not need to be additionally designed. Therefore, a requirement on a manufacturing process of the optical fiber is low, and manufacturing costs are low.

The optical fiber provided in embodiments of this application is a single-mode optical fiber that complies with the G.654.E standard. The optical fiber in embodiments of this application has a large effective mode field area and a short cut-off wavelength. The effective mode field area of the optical fiber may be greater than 110 µm². For example, the effective mode field area of the optical fiber may range from 110.80 µm² to 149.35 µm², and the cut-off wavelength of the optical fiber may be less than or equal to 1460 nm. For example, the cut-off wavelength of the optical fiber may range from 1292 nm to 1455 nm.

Optical fiber spectrum resources used in an optical fiber communication system are an S (short wavelength) band, a C (conventional) band, and an L (long-wavelength) band. The S band is a short wavelength band with a wavelength ranging from 1460 nm to 1530 nm. The C band is a most commonly used band in optical communication with a wavelength ranging from 1530 nm to 1565 nm. The L band is a long wavelength band with a wavelength ranging from 1565 nm to 1625 nm. In this embodiment of this application, the cut-off wavelength of the optical fiber is less than or equal to 1460 nm. That is, the optical fiber in this embodiment of this application can be used in the S band, so that an available spectrum range of the optical fiber is extended, and requirements of 400G and future Tbit/s ultra-high transmission communication systems can be met.

In addition, another parameter of the optical fiber provided in this embodiment of this application also meets a requirement of the G.654.E standard. Specifically, in this embodiment of this application, dispersion of the optical fiber at 1550 nm may be less than or equal to 23 ps/(nm·km). For example, the dispersion of the optical fiber at 1550 nm may range from 20.33 ps/(nm·km) to 22.90 ps/(nm·km). Dispersion of the optical fiber at 1625 nm may be less than or equal to 28 ps/(nm·km). For example, the dispersion of the optical fiber at 1625 nm may range from 24.68 ps/(nm·km) to 27.63 ps/(nm·km). A dispersion slope of the optical fiber at 1550 nm may be less than or equal to 0.07 ps/(nm² ·km). For example, the dispersion slope of the optical fiber at 1550 nm may range from 0.05347 ps/(nm²·km) to 0.06168 ps/(nm²·km). In addition, the optical fiber in this embodiment of this application has a low macro-bending loss. A bending radius of the optical fiber is about 30 mm. When the optical fiber is wound 100 turns, a macro-bending loss of the optical fiber at 1550 nm may be less than or equal to 0.1 dB. For example, the macro-bending loss of the optical fiber at 1550 nm may range from 9.30×10⁻⁵ dB to 1.37×10⁻² dB. A macro-bending loss of the optical fiber at 1625 nm may be less than or equal to 0.1 dB. For example, the macro-bending loss of the optical fiber at 1625 nm may range from 1.51×10⁻³ dB to 9.84×10⁻² dB.

In some embodiments of this application, a thickness (R2-R1) of the outer core layer may range from 1.42 µm to 3.9 µm, a thickness (R3-R2) of the intermediate cladding layer may range from 0.2 µm to 1.62 µm, a thickness (R4-R3) of the inner cladding layer may range from 0.77 µm to 3.55 µm, and a thickness (R5-R4) of the depressed cladding layer may range from 1.06 µm to 8 µm. A radius of the outer cladding layer may be about 62.5 µm.

In a possible implementation, both the inner core layer and the outer core layer may include a germanium-doped silicon dioxide material, and germanium doping concentrations of the inner core layer and the outer core layer are different. That is, the inner core layer and the outer core layer may be silicon dioxide glass layers with different germanium doping concentrations. The intermediate cladding layer closely surrounds the core layer, and the intermediate cladding layer may include a fluorine-doped or germanium-doped silicon dioxide material. The inner cladding layer closely surrounds the intermediate cladding layer. The inner cladding layer may include a silicon dioxide material. Optionally, the inner cladding layer may include an undoped pure silicon dioxide material. Alternatively, the inner cladding layer may include a fluorine-doped or germanium-doped silicon dioxide material. The depressed cladding layer closely surrounds the inner cladding layer, and the depressed cladding layer includes a fluorine-doped silicon dioxide material. The outer cladding layer closely surrounds the depressed cladding layer, and the outer cladding layer includes an undoped pure silicon dioxide material. Optionally, refractive indexes of the inner cladding layer and the outer cladding layer may be the same, or the refractive indexes of the inner cladding layer and the outer cladding layer may be different.

The foregoing describes a basic structure of the optical fiber in embodiments of this application. In embodiments of this application, the optical fiber has a plurality of implementations. The following describes in detail a specific implementation of the optical fiber in embodiments of this application with reference to the accompanying drawings.

### Implementation 1:

FIG. 2 is a diagram of a structure design of an optical fiber according to an embodiment of this application. In the figure, a horizontal coordinate represents a radius of each layer in the optical fiber, and a vertical coordinate represents a relative refractive index difference between each layer in the optical fiber and the outer cladding layer. As shown in FIG. 2, the refractive index of the inner core layer is less than the refractive index of the outer core layer, the refractive index of the inner core layer is greater than the refractive index of the intermediate cladding layer, the refractive index of the intermediate cladding layer is greater than the refractive index of the inner cladding layer, the refractive index of the depressed cladding layer is less than a refractive index of the outer cladding layer, and the refractive index of the inner cladding layer may be equal to the refractive index of the outer cladding layer.

Table 1 shows profile parameters of the optical fiber in embodiments of the present invention, and Table 2 shows performance parameters of the optical fiber in embodiments of the present invention. With reference to Table 1 and Table 2, a specific embodiment of Implementation 1 is described by using an example.

### Embodiment 1:

The radius R1 of the inner core layer may be 4.73 µm, and the relative refractive index difference Δ1 between the inner core layer and the outer cladding layer may be 0.23%. The radius R2 of the outer core layer may be 6.46 µm, the thickness (R2-R1) of the outer core layer may be 1.73 µm, and the relative refractive index difference Δ2 between the outer core layer and the outer cladding layer may be 0.26%. The radius R3 of the intermediate cladding layer may be 6.80 µm, the thickness (R3-R2) of the intermediate cladding layer may be 0.34 µm, and the relative refractive index difference Δ3 between the intermediate cladding layer and the outer cladding layer may be 0.015%. The radius R4 of the inner cladding layer may be 7.57 µm, the thickness (R4-R3) of the inner cladding layer may be 0.77 µm, and the refractive index of the inner cladding layer may be approximately the same as that of the outer cladding layer. The radius R5 of the depressed cladding layer may be 9.21 µm, the thickness (R5-R4) of the depressed cladding layer may be 1.64 µm, and the relative refractive index difference Δ4 between the depressed cladding layer and the outer cladding layer may be -0.35%.

In Embodiment 1, an effective mode field area of the optical fiber at 1550 nm is 125 µm², a cut-off wavelength of the optical fiber is 1365 nm, dispersion of the optical fiber at 1550 nm is 20.26 ps/(nm·km), dispersion of the optical fiber at 1625 nm is 24.46 ps/(nm·km), and a dispersion slope of the optical fiber at 1550 nm is 0.05347 ps/(nm² ·km). When a bending radius of the optical fiber is about 30 mm and the optical fiber is wound 100 turns, the macro-bending loss of the optical fiber at 1550 nm is 1.70×10⁻³ dB, and the macro-bending loss of the optical fiber at 1625 nm is 1.96×10⁻² dB.

### Embodiment 2:

The radius R1 of the inner core layer may be 1.40 µm, and the relative refractive index difference Δ1 between the inner core layer and the outer cladding layer may be 0.08%. The radius R2 of the outer core layer may be 5.30 µm, the thickness (R2-R1) of the outer core layer may be 3.90 µm, and the relative refractive index difference Δ2 between the outer core layer and the outer cladding layer may be 0.28%. The radius R3 of the intermediate cladding layer may be 5.50 µm, the thickness (R3-R2) of the intermediate cladding layer may be 0.20 µm, and the relative refractive index difference Δ3 between the intermediate cladding layer and the outer cladding layer may be 0.05%. The radius R4 of the inner cladding layer may be 9.00 µm, the thickness (R4-R3) of the inner cladding layer may be 3.50 µm, and the refractive index of the inner cladding layer may be approximately the same as that of the outer cladding layer. The radius R5 of the depressed cladding layer may be 11.00 µm, the thickness (R5-R4) of the depressed cladding layer may be 2.00 µm, and the relative refractive index difference Δ4 between the depressed cladding layer and the outer cladding layer may be -0.50%.

In Embodiment 2, an effective mode field area of the optical fiber at 1550 nm is 111.25 µm², a cut-off wavelength of the optical fiber is 1292 nm, dispersion of the optical fiber at 1550 nm is 20.06 ps/(nm·km), dispersion of the optical fiber at 1625 nm is 26.49 ps/(nm·km), and a dispersion slope of the optical fiber at 1550 nm is 0.05949 ps/(nm² ·km). When a bending radius of the optical fiber is about 30 mm and the optical fiber is wound 100 turns, the macro-bending loss of the optical fiber at 1550 nm is 2.66×10⁻³ dB, and the macro-bending loss of the optical fiber at 1625 nm is 3.47×10⁻² dB.

### Embodiment 3:

The radius R1 of the inner core layer may be 3.00 µm, and the relative refractive index difference Δ1 between the inner core layer and the outer cladding layer may be 0.10%. The radius R2 of the outer core layer may be 5.68 µm, the thickness (R2-R1) of the outer core layer may be 2.68 µm, and the relative refractive index difference Δ2 between the outer core layer and the outer cladding layer may be 0.30%. The radius R3 of the intermediate cladding layer may be 6.25 µm, the thickness (R3-R2) of the intermediate cladding layer may be 0.57 µm, and the relative refractive index difference Δ3 between the intermediate cladding layer and the outer cladding layer may be 0.20%. The radius R4 of the inner cladding layer may be 9.80 µm, the thickness (R4-R3) of the inner cladding layer may be 3.55 µm, and the refractive index of the inner cladding layer may be approximately the same as that of the outer cladding layer. The radius R5 of the depressed cladding layer may be 12.00 µm, the thickness (R5-R4) of the depressed cladding layer may be 2.20 µm, and the relative refractive index difference Δ4 between the depressed cladding layer and the outer cladding layer may be -1.00%.

In Embodiment 3, an effective mode field area of the optical fiber at 1550 nm is 148.69 µm², a cut-off wavelength of the optical fiber is 1450 nm, dispersion of the optical fiber at 1550 nm is 22.87 ps/(nm·km), dispersion of the optical fiber at 1625 nm is 27.63 ps/(nm·km), and a dispersion slope of the optical fiber at 1550 nm is 0.06095 ps/(nm² ·km). When a bending radius of the optical fiber is about 30 mm and the optical fiber is wound 100 turns, the macro-bending loss of the optical fiber at 1550 nm is 2.10×10⁻³, and the macro-bending loss of the optical fiber at 1625 nm is 2.10×10⁻².

### Embodiment 4:

The radius R1 of the inner core layer may be 3.16 µm, and the relative refractive index difference Δ1 between the inner core layer and the outer cladding layer may be 0.12%. The radius R2 of the outer core layer may be 4.58 µm, the thickness (R2-R1) of the outer core layer may be 1.42 µm, and the relative refractive index difference Δ2 between the outer core layer and the outer cladding layer may be 0.48%. The radius R3 of the intermediate cladding layer may be 6.20 µm, the thickness (R3-R2) of the intermediate cladding layer may be 1.62 µm, and the relative refractive index difference Δ3 between the intermediate cladding layer and the outer cladding layer may be 0.021%. The radius R4 of the inner cladding layer may be 8.76 µm, the thickness (R4-R3) of the inner cladding layer may be 2.56 µm, and the refractive index of the inner cladding layer may be approximately the same as that of the outer cladding layer. The radius R5 of the depressed cladding layer may be 13.52 µm, the thickness (R5-R4) of the depressed cladding layer may be 4.76 µm, and the relative refractive index difference Δ4 between the depressed cladding layer and the outer cladding layer may be -0.32%.

In Embodiment 4, an effective mode field area of the optical fiber at 1550 nm is 128.21 µm², a cut-off wavelength of the optical fiber is 1337 nm, dispersion of the optical fiber at 1550 nm is 20.66 ps/(nm·km), dispersion of the optical fiber at 1625 nm is 25.42 ps/(nm·km), and a dispersion slope of the optical fiber at 1550 nm is 0.06168 ps/(nm²·km). When a bending radius of the optical fiber is about 30 mm and the optical fiber is wound 100 turns, the macro-bending loss of the optical fiber at 1550 nm is 7.91×10⁻³, and the macro-bending loss of the optical fiber at 1625 nm is 8.53×10⁻².

### Embodiment 5:

The radius R1 of the inner core layer may be 3.68 µm, and the relative refractive index difference Δ1 between the inner core layer and the outer cladding layer may be 0.22%. The radius R2 of the outer core layer may be 5.50 µm, the thickness (R2-R1) of the outer core layer may be 1.82 µm, and the relative refractive index difference Δ2 between the outer core layer and the outer cladding layer may be 0.28%. The radius R3 of the intermediate cladding layer may be 6.75 µm, the thickness (R3-R2) of the intermediate cladding layer may be 1.25 µm, and the relative refractive index difference Δ3 between the intermediate cladding layer and the outer cladding layer may be 0.073%. The radius R4 of the inner cladding layer may be 8.70 µm, the thickness (R4-R3) of the inner cladding layer may be 1.95 µm, and the refractive index of the inner cladding layer may be approximately the same as that of the outer cladding layer. The radius R5 of the depressed cladding layer may be 11.00 µm, the thickness (R5-R4) of the depressed cladding layer may be 2.30 µm, and the relative refractive index difference Δ4 between the depressed cladding layer and the outer cladding layer may be -0.20%.

In Embodiment 5, an effective mode field area of the optical fiber at 1550 nm is 126.92 µm², a cut-off wavelength of the optical fiber is 1400 nm, dispersion of the optical fiber at 1550 nm is 21.92 ps/(nm·km), dispersion of the optical fiber at 1625 nm is 26.25 ps/(nm·km), and a dispersion slope of the optical fiber at 1550 nm is 0.05522 ps/(nm² ·km). When a bending radius of the optical fiber is about 30 mm and the optical fiber is wound 100 turns, the macro-bending loss of the optical fiber at 1550 nm is 1.22×10⁻³ and the macro-bending loss of the optical fiber at 1625 nm is 1.34×10⁻².

In Implementation 1 of this application, the optical fiber in all Embodiments 1 to 5 has a large effective mode field area, and the effective mode field area is greater than 111 *µm*² or even reaches 148 *µm*² at 1550 nm, so that an optical power density can be effectively reduced, to reduce impact of a nonlinear optical effect.

In the optical fiber in Embodiments 1 to 5, R1 of the inner core layer ranges from 1.40 µm to 4.80 µm, and R2 of the outer core layer ranges from 4.58 µm to 7.50 µm. A diameter of the core layer is large, and the cut-off wavelength is less than 1460 nm or even reaches 1292 nm. The optical fiber can be well used in the S band and a spectrum is extended.

In Embodiments 1 to 5, the dispersion of the optical fiber at 1550 nm is less than 23 ps/(nm·km), and the dispersion slope of the optical fiber at 1550 nm is less than 0.07 ps/(*nm*²·km). The optical fiber has a small dispersion parameter.

In addition, in this application, a macro-bending loss of the optical fiber can be reduced, and the optical fiber has good bending resistance performance. In Embodiments 1 to 5, when a bending radius is 30 mm and the optical fiber is wound 100 turns, the macro-bending loss of the optical fiber at 1550 nm is less than 0.1 dB, and may even reach 1.73×10⁻³ dB. The macro-bending loss of the optical fiber at 1625 nm is less than 0.1 dB, and may even reach 1.96×10⁻² dB. Both macro-bending losses are small.

**Table 1 Profile parameters of the optical fiber in embodiments of the present invention**

| Embodiment | Inner core layer R1 (µm) | Outer core layer R2 (µm) | Intermediate cladding layer R3 (µm) | Inner cladding layer R4 (µm) | Depressed cladding layer R5 (µm) | Δ**1** (%) | Δ**2** (%) | Δ**3** (%) | Δ**4** (%) |
|---|---|---|---|---|---|---|---|---|---|
| 1 | 4.73 | 6.46 | 6.80 | 7.57 | 9.21 | 0.23 | 0.26 | 0.015 | -0.35 |
| 2 | 1.40 | 5.30 | 5.50 | 9.00 | 11.00 | 0.08 | 0.28 | 0.05 | -0.50 |
| 3 | 3.00 | 5.68 | 6.25 | 9.80 | 12.00 | 0.10 | 0.30 | 0.20 | -1.00 |
| 4 | 3.16 | 4.58 | 6.20 | 8.76 | 13.52 | 0.12 | 0.48 | 0.021 | -0.32 |
| 5 | 3.68 | 5.50 | 6.75 | 8.70 | 11.00 | 0.22 | 0.28 | 0.073 | -0.20 |
| 6 | 4.80 | 7.50 | 9.00 | 10.00 | 18.00 | 0.24 | 0.16 | 0.02 | -0.02 |
| 7 | 3.50 | 5.00 | 6.60 | 9.80 | 10.86 | 0.22 | 0.45 | -0.08 | -0.35 |
| 8 | 4.50 | 6.80 | 7.00 | 9.50 | 13.90 | 0.21 | 0.19 | -0.02 | -0.30 |

**Table 2 Performance parameters of the optical fiber in embodiments of the present invention**

| Embodiment | Effective mode field area @1550 nm (um²) | Dispersion @1550 nm (ps/(nm·km)) | Dispersion @1625 nm (ps/(nm·km)) | Dispersion slope @1550 nm (ps/(nm²km)) | Cut-off wavelength (nm) | Macro-bending loss (30 mm 10 turns) @1550 nm (dB) | Macro-bending loss (30 mm 10 turns) @1625 nm (dB) |
|---|---|---|---|---|---|---|---|
| 1 | 125.00 | 22.26 | 26.46 | 0.05347 | 1365 | 1.70×10⁻³ | 1.96×10⁻² |
| 2 | 111.25 | 22.06 | 26.49 | 0.05949 | 1292 | 2.66×10⁻³ | 3.47×10⁻² |
| 3 | 148.69 | 22.87 | 27.63 | 0.06095 | 1450 | 2.10×10⁻³ | 2.10×10⁻² |
| 4 | 128.21 | 20.66 | 25.42 | 0.06168 | 1337 | 7.91×10⁻³ | 8.53×10⁻² |
| 5 | 126.92 | 21.92 | 26.25 | 0.05522 | 1400 | 1.22×10⁻³ | 1.34×10⁻² |
| 6 | 149.35 | 21.19 | 25.64 | 0.05687 | 1455 | 2.78×10⁻³ | 2.06×10⁻² |
| 7 | 110.80 | 20.33 | 24.68 | 0.05603 | 1365 | 9.30×10⁻⁵ | 1.51×10⁻³ |
| 8 | 133.55 | 22.90 | 27.42 | 0.05754 | 1343 | 1.37×10⁻² | 9.84×10⁻² |

### Implementation 2:

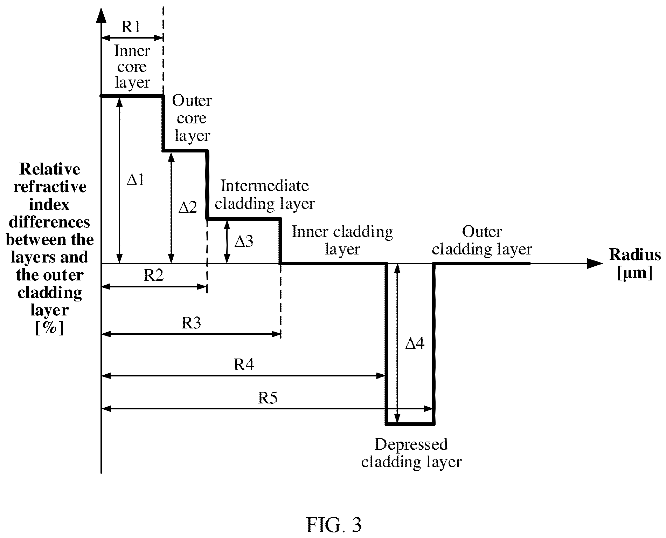

FIG. 3 is a diagram of another structure design of an optical fiber according to an embodiment of this application. In the figure, a horizontal coordinate represents a radius of each layer in the optical fiber, and a vertical coordinate represents a relative refractive index difference between each layer in the optical fiber and the outer cladding layer. As shown in FIG. 3, the refractive index of the inner core layer is greater than the refractive index of the outer core layer, the refractive index of the outer core layer is greater than the refractive index of the intermediate cladding layer, the refractive index of the intermediate cladding layer is greater than the refractive index of the inner cladding layer, the refractive index of the depressed cladding layer is less than a refractive index of the outer cladding layer, and the refractive index of the inner cladding layer may be equal to the refractive index of the outer cladding layer. Different from Implementation 1, in Implementation 2, the refractive index of the inner core layer is greater than the refractive index of the outer core layer, so that the effective mode field area of the optical fiber can be larger.

With reference to Table 1 and Table 2, the following describes a specific embodiment of Implementation 2 by using an example.

### Embodiment 6:

The radius R1 of the inner core layer may be 4.80 µm, and the relative refractive index difference Δ1 between the inner core layer and the outer cladding layer may be 0.24%. The radius R2 of the outer core layer may be 7.50 µm, the thickness (R2-R1) of the outer core layer may be 2.7 µm, and the relative refractive index difference Δ2 between the outer core layer and the outer cladding layer may be 0.16%. The radius R3 of the intermediate cladding layer may be 9.00 µm, the thickness (R3-R2) of the intermediate cladding layer may be 1.50 µm, the relative refractive index difference Δ3 between the intermediate cladding layer and the outer cladding layer may be 0.02%. The radius R4 of the inner cladding layer may be 10.00 µm, the thickness (R4-R3) of the inner cladding layer may be 1.00 µm, and the refractive index of the inner cladding layer may be approximately the same as that of the outer cladding layer. The radius R5 of the depressed cladding layer may be 18.00 µm, the thickness (R5-R4) of the depressed cladding layer may be 8.00 µm, and the relative refractive index difference Δ4 between the depressed cladding layer and the outer cladding layer may be -0.02%.

In Embodiment 6, an effective mode field area of the optical fiber at 1550 nm is 149.35 µm², a cut-off wavelength of the optical fiber is 1455 nm, dispersion of the optical fiber at 1550 nm is 21.19 ps/(nm·km), dispersion of the optical fiber at 1625 nm is 25.64 ps/(nm·km), and a dispersion slope of the optical fiber at 1550 nm is 0.05687 ps/(nm² ·km). When a bending radius is about 30 mm and the optical fiber is wound 100 turns, the macro-bending loss of the optical fiber at 1550 nm is 2.78×10⁻³, and the macro-bending loss of the optical fiber at 1625 nm is 2.06×10⁻².

In Implementation 2 of this application, the optical fiber in Embodiment 6 has a large core layer diameter, to implement a large effective mode field area, the effective mode field area reaches 149 *µm*² at 1550 nm, and impact of nonlinear optical effect can be effectively reduced. In addition, when the large effective mode field area is implemented, it is further ensured that a cut-off wavelength is less than the S band, and is specifically 1455 nm. The optical fiber can be well used in the S band, and a spectrum is extended.

In addition, in Embodiment 6, dispersion of the optical fiber at 1550 nm is 21.19 ps/(nm·km), dispersion of the optical fiber at 1625 nm is 25.64 ps/(nm·km), and a dispersion slope of the optical fiber at 1550 nm is 0.05687 ps/(*nm*²·km). Dispersion parameters are small. In Embodiment 6, when a bending radius is 30 mm and the optical fiber is wound 100 turns, the macro-bending loss of the optical fiber at 1550 nm is 2.78×10⁻³ dB, and the macro-bending loss of the optical fiber at 1625 nm is 2.06×10⁻² dB. The optical fiber has very small macro-bending losses.

### Implementation 3:

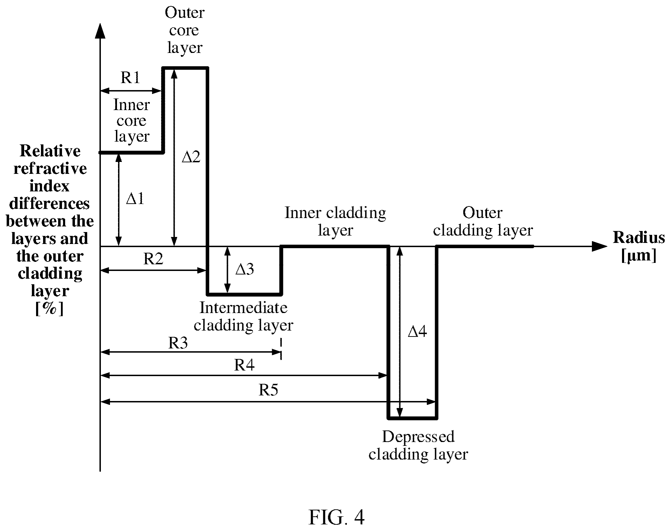

FIG. 4 is a diagram of another structure design of an optical fiber according to an embodiment of this application. In the figure, a horizontal coordinate represents a radius of each layer in the optical fiber, and a vertical coordinate represents a relative refractive index difference between each layer in the optical fiber and the outer cladding layer. As shown in FIG. 4, the refractive index of the inner core layer is less than the refractive index of the outer core layer, the refractive index of the inner core layer is greater than the refractive index of the intermediate cladding layer, the refractive index of the intermediate cladding layer is less than the refractive index of the inner cladding layer, the refractive index of the depressed cladding layer is less than a refractive index of the outer cladding layer, and the refractive index of the inner cladding layer may be equal to the refractive index of the outer cladding layer. Different from Implementation 1, in Implementation 3, the refractive index of the intermediate cladding layer is less than the refractive index of the inner cladding layer, so that the macro-bending loss of the optical fiber can be reduced.

With reference to Table 1 and Table 2, the following describes a specific embodiment of Implementation 3 by using an example.

### Embodiment 7:

The radius R1 of the inner core layer may be 3.50 µm, and the relative refractive index difference Δ1 between the inner core layer and the outer cladding layer may be 0.22%. The radius R2 of the outer core layer may be 5.00 µm, the thickness (R2-R1) of the outer core layer may be 1.50 µm, and the relative refractive index difference Δ2 between the outer core layer and the outer cladding layer may be 0.45%. The radius R3 of the intermediate cladding layer may be 6.60 µm, the thickness (R3-R2) of the intermediate cladding layer may be 1.60 µm, and the relative refractive index difference Δ3 between the intermediate cladding layer and the outer cladding layer may be -0.08%. The radius R4 of the inner cladding layer may be 9.80 µm, the thickness (R4-R3) of the inner cladding layer may be 3.20 µm, and the refractive index of the inner cladding layer may be approximately the same as that of the outer cladding layer. The radius R5 of the depressed cladding layer may be 10.86 µm, the thickness (R5-R4) of the depressed cladding layer may be 1.06 µm, and the relative refractive index difference Δ4 between the depressed cladding layer and the outer cladding layer may be -0.35%.

In Embodiment 7, an effective mode field area of the optical fiber at 1550 nm is 110.80 µm², a cut-off wavelength of the optical fiber is 1365 nm, dispersion of the optical fiber at 1550 nm is 20.33 ps/(nm·km), dispersion of the optical fiber at 1625 nm is 24.68 ps/(nm·km), and a dispersion slope of the optical fiber at 1550 nm is 0.05603 ps/(nm²·km). When a bending radius is about 30 mm and the optical fiber is wound 100 turns, the macro-bending loss of the optical fiber at 1550 nm is 9.30×10⁻⁵ and the macro-bending loss of the optical fiber at 1625 nm is 1.51×10⁻³.

In Embodiment 7, the optical fiber has a large effective mode field area, the effective mode field area reaches 110 *µm*² at 1550 nm, and impact of nonlinear optical effect can be effectively reduced. In addition, when the large effective mode field area is implemented, it is further ensured that a cut-off wavelength is less than the S band, and is specifically 1365 nm. The optical fiber can be well used in the S band, and a spectrum is extended.

In addition, in Embodiment 7, dispersion of the optical fiber at 1550 nm is 20.33 ps/(nm·km), dispersion of the optical fiber at 1625 nm is 24.68 ps/(nm·km), and a dispersion slope of the optical fiber at 1550 nm is 0.05603 ps/(*nm*²·km). Dispersion parameters are small. In Embodiment 7, when a bending radius is 30 mm and the optical fiber is wound 100 turns, the macro-bending loss of the optical fiber at 1550 nm is 9.3×10⁻⁵ dB, and the macro-bending loss of the optical fiber at 1625 nm is 1.51×10⁻³ dB. The optical fiber has very small macro-bending losses.

### Implementation 4:

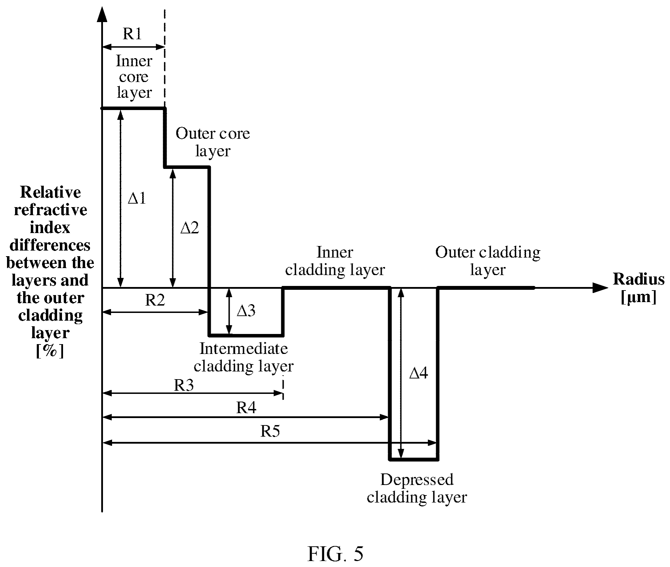

FIG. 5 is a diagram of another structure design of an optical fiber according to an embodiment of this application. In the figure, a horizontal coordinate represents a radius of each layer in the optical fiber, and a vertical coordinate represents a relative refractive index difference between each layer in the optical fiber and the outer cladding layer. As shown in FIG. 5, the refractive index of the inner core layer is greater than the refractive index of the outer core layer, the refractive index of the outer core layer is greater than the refractive index of the intermediate cladding layer, the refractive index of the intermediate cladding layer is less than the refractive index of the inner cladding layer, the refractive index of the depressed cladding layer is less than a refractive index of the outer cladding layer, and the refractive index of the inner cladding layer may be equal to the refractive index of the outer cladding layer. Different from Implementation 2, in Implementation 4, the refractive index of the intermediate cladding layer is less than the refractive index of the inner cladding layer, so that the macro-bending loss of the optical fiber can be reduced.

With reference to Table 1 and Table 2, the following describes a specific embodiment of Implementation 4 by using an example.

### Embodiment 8:

The radius R1 of the inner core layer may be 4.50 µm, and the relative refractive index difference Δ1 between the inner core layer and the outer cladding layer may be 0.21%. The radius R2 of the outer core layer may be 6.80 µm, the thickness (R2-R1) of the outer core layer may be 2.30 µm, and the relative refractive index difference Δ2 between the outer core layer and the outer cladding layer may be 0.19%. The radius R3 of the intermediate cladding layer may be 7.00 µm, the thickness (R3-R2) of the intermediate cladding layer may be 0.20 µm, and the relative refractive index difference Δ3 between the intermediate cladding layer and the outer cladding layer may be -0.02%. The radius R4 of the inner cladding layer may be 9.50 µm, the thickness (R4-R3) of the inner cladding layer may be 2.50 µm, and the refractive index of the inner cladding layer may be approximately the same as that of the outer cladding layer. The radius R5 of the depressed cladding layer may be 13.90 µm, the thickness (R5-R4) of the depressed cladding layer may be 4.40 µm, and the relative refractive index difference Δ4 between the depressed cladding layer and the outer cladding layer may be -0.30%.

In Embodiment 8, an effective mode field area of the optical fiber at 1550 nm is 133.55 µm², a cut-off wavelength of the optical fiber is 1343 nm, dispersion of the optical fiber at 1550 nm is 22.90 ps/(nm·km), dispersion of the optical fiber at 1625 nm is 27.42 ps/(nm·km), and a dispersion slope of the optical fiber at 1550 nm is 0.05754 ps/(nm²·km). When a bending radius is about 30 mm and the optical fiber is wound 100 turns, the macro-bending loss of the optical fiber at 1550 nm is 1.37×10⁻², and the macro-bending loss of the optical fiber at 1625 nm is 9.84×10⁻².

In Embodiment 8, the optical fiber has a large effective mode field area, the effective mode field area reaches 133.55 *µm*² at 1550 nm, and impact of nonlinear optical effect can be effectively reduced. In addition, when the large effective mode field area is implemented, it is further ensured that a cut-off wavelength is less than the S band, and is specifically 1343 nm. The optical fiber can be well used in the S band, and a spectrum is extended.

In addition, in Embodiment 8, dispersion of the optical fiber at 1550 nm is 22.9 ps/(nm·km), dispersion of the optical fiber at 1625 nm is 27.42 ps/(nm·km), and a dispersion slope of the optical fiber at 1550 nm is 0.05754 ps/(*nm*²·km). Dispersion parameters are small. In Embodiment 8, when a bending radius is 30 mm and the optical fiber is wound 100 turns, the macro-bending loss of the optical fiber at 1550 nm is 1.37×10⁻² dB, and the macro-bending loss of the optical fiber at 1625 nm is 9.84×10⁻² dB. The optical fiber has very small macro-bending losses, and complies with a macro-bending loss standard of a G.654 optical fiber.

The foregoing uses Embodiments 1 to 8 as examples to describe the optical fiber in this application. During specific implementation, a radius and a refractive index of each layer in the optical fiber may be properly set based on an actual requirement. Examples are not described herein one by one. In Embodiments 1 to 8, for example, the refractive index of the inner cladding layer may be approximately the same as that of the outer cladding layer. In specific setting, the refractive index of the inner cladding layer may also be different from the refractive index of the outer cladding layer.

In conclusion, in this application, the radius and the refractive index of each layer in the optical fiber are properly designed, so that the cut-off wavelength of the optical fiber is less than 1460 nm, and the optical fiber is applicable to the S band. This extends a single-mode spectral range of the G.654 optical fiber. Therefore, the optical fiber has a large effective mode field area, to effectively suppress impact of nonlinear effect and reduce the macro-bending loss of the optical fiber. In other words, the optical fiber in embodiments of this application can ensure performance of an original G.654.E optical fiber, and implement a large effective mode field area and a cut-off wavelength that are lower than those of the S band. That is, an optical fiber that meets the G.654 standard is obtained. Therefore, the optical fiber in embodiments of this application can be used in 400G and future Tbit/s ultra-high transmission communication systems. A new profile structure is simple and controllable.

Although embodiments of this application are described, a person skilled in the art can make changes and modifications to these embodiments after they learn of a basic inventive concept. Therefore, the following claims are intended to be construed as to cover the preferred embodiments and all changes and modifications falling within the scope of this application.

It is clear that a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. An optical fiber, comprising a core layer and a cladding layer surrounding the core layer,
wherein
the core layer comprises an inner core layer and an outer core layer surrounding the inner core layer;
the cladding layer comprises: an intermediate cladding layer, an inner cladding layer, a depressed cladding layer, and an outer cladding layer that are arranged in sequence from inside to outside;
refractive indexes of the inner core layer, the outer core layer, the intermediate cladding layer, the inner cladding layer, and the depressed cladding layer are different, and the refractive index of the depressed cladding layer is less than a refractive index of any one of the inner core layer, the outer core layer, the intermediate cladding layer, and the inner cladding layer;
a radius of the inner core layer ranges from 1.40 µm to 4.80 µm, and a relative refractive index difference between the inner core layer and the outer cladding layer ranges from 0.08% to 0.24%;
a radius of the outer core layer ranges from 4.58 µm to 7.50 µm, and a relative refractive index difference between the outer core layer and the outer cladding layer ranges from 0.16% to 0.48%;
a radius of the intermediate cladding layer ranges from 5.50 µm to 9.00 µm, a relative refractive index difference between the intermediate cladding layer and the outer cladding layer ranges from -0.08% to 0.20%, and the relative refractive index difference between the intermediate cladding layer and the outer cladding layer is not 0;
a radius of the inner cladding layer ranges from 7.57 µm to 10.00 µm; and
a radius of the depressed cladding layer ranges from 9.21 µm to 18.00 µm, and a relative refractive index difference between the depressed cladding layer and the outer cladding layer ranges from -1.00% to -0.02%.

2. The optical fiber according to claim 1, wherein a thickness of the outer core layer ranges from 1.42 µm to 3.9 µm;
a thickness of the intermediate cladding layer ranges from 0.2 µm to 1.62 µm;
a thickness of the inner cladding layer ranges from 0.77 µm to 3.55 µm; and
a thickness of the depressed cladding layer ranges from 1.06 µm to 8 µm.

3. The optical fiber according to claim 1 or 2, wherein both the inner core layer and the outer core layer comprise a germanium-doped silicon dioxide material, and germanium doping concentrations of the inner core layer and the outer core layer are different;
the intermediate cladding layer comprises a fluorine-doped or germanium-doped silicon dioxide material;
the inner cladding layer comprises a silicon dioxide material;
the depressed cladding layer comprises a fluorine-doped silicon dioxide material; and
the outer cladding layer comprises an undoped pure silicon dioxide material.

4. The optical fiber according to any one of claims 1 to 3, wherein the refractive index of the inner core layer is less than the refractive index of the outer core layer, and the refractive index of the inner core layer is greater than the refractive index of the intermediate cladding layer; and
the refractive index of the intermediate cladding layer is greater than the refractive index of the inner cladding layer.

5. The optical fiber according to claim 4, wherein the radius of the inner core layer is 4.73 µm, and the relative refractive index difference between the inner core layer and the outer cladding layer is 0.23%;
the radius of the outer core layer is 6.46 µm, and the relative refractive index difference between the outer core layer and the outer cladding layer is 0.26%;
the radius of the intermediate cladding layer is 6.80 µm, and the relative refractive index difference between the intermediate cladding layer and the outer cladding layer is 0.015%;
the radius of the inner cladding layer is 7.57 µm; and
the radius of the depressed cladding layer is 9.21 µm, and the relative refractive index difference between the depressed cladding layer and the outer cladding layer is -0.35%.

6. The optical fiber according to claim 4, wherein the radius of the inner core layer is 1.40 µm, and the relative refractive index difference between the inner core layer and the outer cladding layer is 0.08%;
the radius of the outer core layer is 5.30 µm, and the relative refractive index difference between the outer core layer and the outer cladding layer is 0.28%;
the radius of the intermediate cladding layer is 5.50 µm, and the relative refractive index difference between the intermediate cladding layer and the outer cladding layer is 0.05%;
the radius of the inner cladding layer is 9.00 µm; and
the radius of the depressed cladding layer is 11.00 µm, and the relative refractive index difference between the depressed cladding layer and the outer cladding layer is -0.50%.

7. The optical fiber according to claim 4, wherein the radius of the inner core layer is 3.00 µm, and the relative refractive index difference between the inner core layer and the outer cladding layer is 0.10%;
the radius of the outer core layer is 5.68 µm, and the relative refractive index difference between the outer core layer and the outer cladding layer is 0.30%;
the radius of the intermediate cladding layer is 6.25 µm, and the relative refractive index difference between the intermediate cladding layer and the outer cladding layer is 0.20%;
the radius of the inner cladding layer is 9.80 µm; and
the radius of the depressed cladding layer is 12.00 µm, and the relative refractive index difference between the depressed cladding layer and the outer cladding layer is -1.00%.

8. The optical fiber according to claim 4, wherein the radius of the inner core layer is 3.16 µm, and the relative refractive index difference between the inner core layer and the outer cladding layer is 0.12%;
the radius of the outer core layer is 4.58 µm, and the relative refractive index difference between the outer core layer and the outer cladding layer is 0.48%;
the radius of the intermediate cladding layer is 6.20 µm, and the relative refractive index difference between the intermediate cladding layer and the outer cladding layer is 0.021%;
the radius of the inner cladding layer is 8.76 µm; and
the radius of the depressed cladding layer is 13.52 µm, and the relative refractive index difference between the depressed cladding layer and the outer cladding layer is -0.32%.

9. The optical fiber according to claim 4, wherein the radius of the inner core layer is 3.68 µm, and the relative refractive index difference between the inner core layer and the outer cladding layer is 0.22%;
the radius of the outer core layer is 5.50 µm, and the relative refractive index difference between the outer core layer and the outer cladding layer is 0.28%;
the radius of the intermediate cladding layer is 6.75 µm, and the relative refractive index difference between the intermediate cladding layer and the outer cladding layer is 0.073%;
the radius of the inner cladding layer is 8.70 µm; and
the radius of the depressed cladding layer is 11.00 µm, and the relative refractive index difference between the depressed cladding layer and the outer cladding layer is -0.20%.

10. The optical fiber according to any one of claims 1 to 3, wherein the refractive index of the inner core layer is greater than the refractive index of the outer core layer, the refractive index of the outer core layer is greater than the refractive index of the intermediate cladding layer, and the refractive index of the intermediate cladding layer is greater than the refractive index of the inner cladding layer.

11. The optical fiber according to claim 10, wherein the radius of the inner core layer is 4.80 µm, and the relative refractive index difference between the inner core layer and the outer cladding layer is 0.24%;
the radius of the outer core layer is 7.50 µm, and the relative refractive index difference between the outer core layer and the outer cladding layer is 0.16%;
the radius of the intermediate cladding layer is 9.00 µm, and the relative refractive index difference between the intermediate cladding layer and the outer cladding layer is 0.02%;
the radius of the inner cladding layer is 10.00 µm; and
the radius of the depressed cladding layer is 18.00 µm, and the relative refractive index difference between the depressed cladding layer and the outer cladding layer is -0.02%.

12. The optical fiber according to any one of claims 1 to 3, wherein the refractive index of the inner core layer is less than the refractive index of the outer core layer, and the refractive index of the inner core layer is greater than the refractive index of the intermediate cladding layer; and
the refractive index of the intermediate cladding layer is less than the refractive index of the inner cladding layer.

13. The optical fiber according to claim 12, wherein the radius of the inner core layer is 3.50 µm, and the relative refractive index difference between the inner core layer and the outer cladding layer is 0.22%;
the radius of the outer core layer is 5.00 µm, and the relative refractive index difference between the outer core layer and the outer cladding layer is 0.45%;
the radius of the intermediate cladding layer is 6.60 µm, and the relative refractive index difference between the intermediate cladding layer and the outer cladding layer is -0.08%;
the radius of the inner cladding layer is 9.80 µm; and
the radius of the depressed cladding layer is 10.86 µm, and the relative refractive index difference between the depressed cladding layer and the outer cladding layer is -0.35%.

14. The optical fiber according to any one of claims 1 to 3, wherein the refractive index of the inner core layer is greater than the refractive index of the outer core layer, and the refractive index of the outer core layer is greater than the refractive index of the intermediate cladding layer; and
the refractive index of the intermediate cladding layer is less than the refractive index of the inner cladding layer.

15. The optical fiber according to claim 14, wherein the radius of the inner core layer is 4.50 µm, and the relative refractive index difference between the inner core layer and the outer cladding layer is 0.21%;
the radius of the outer core layer is 6.80 µm, and the relative refractive index difference between the outer core layer and the outer cladding layer is 0.19%;
the radius of the intermediate cladding layer is 7.00 µm, and the relative refractive index difference between the intermediate cladding layer and the outer cladding layer is -0.02%;
the radius of the inner cladding layer is 9.50 µm; and
the radius of the depressed cladding layer is 13.90 µm, and the relative refractive index difference between the depressed cladding layer and the outer cladding layer is -0.30%.

16. The optical fiber according to any one of claims 1 to 15, wherein the optical fiber is a single-mode optical fiber complying with a G.654.E standard, an effective mode field area of the optical fiber is greater than or equal to 110 µm², and a cut-off wavelength of the optical fiber is less than or equal to 1460 nm.

17. The optical fiber according to any one of claims 1 to 15, wherein dispersion of the optical fiber at 1550 nm is less than or equal to 23 ps/(nm·km), dispersion of the optical fiber at 1625 nm is less than or equal to 28 ps/(nm·km), and a dispersion slope of the optical fiber at 1550 nm is less than or equal to 0.07 ps/(*nm*²·km).

18. The optical fiber according to any one of claims 1 to 15, wherein when a bending radius of the optical fiber is 30 mm and the optical fiber is wound 100 turns, a macro-bending loss at 1550 nm is less than or equal to 0.1 dB; and
when the bending radius of the optical fiber is 30 mm and the optical fiber is wound 100 turns, a macro-bending loss at 1625 nm is less than or equal to 0.1 dB.
